Europäisches Patentamt

European Patent Office

Office européen des brevets

(11) Publication number: **0 032 065**
**A1**

## EUROPEAN PATENT APPLICATION

(21) Application number: **80304775.2**

(22) Date of filing: **31.12.80**

(51) Int. Cl.³: **F 16 C 1/20**
**B 29 F 3/10, F 16 H 19/00**

(30) Priority: **02.01.80 US 109123**

(43) Date of publication of application:
**15.07.81 Bulletin 81/28**

(84) Designated Contracting States:
**DE FR GB IT**

(71) Applicant: **ACCO INDUSTRIES INC.**
**101 Oakview Drive**
**Trumbull Connecticut 06611(US)**

(72) Inventor: **Gilmore, William John**

**Manitou Beach Michigan(US)**

(74) Representative: **Lewis, David Overington**
**c/o Babcock International Ltd. Cleveland House St.**
**James's Square**
**London SW1Y 4LN(GB)**

(54) Flexible drive-transmission cables and methods of providing such cables with plastics coverings.

(57) A flexible cable (1) having wire (4) helically coiled around a flexible core (2), the wire turns being engageable by a pinion for effecting longitudinal drive of the cable in a tubular guide, has a covering (10) of plastics material which is thicker over the crowns (6) of the wire turns than over the core surfaces (7) between the wire turns; such a covering can be applied to the cable by machine-extruding around the cable a sleeve of heated covering material while exerting an appropriate pneumatic pressure difference between the exterior and the interior of the sleeve.

FIG.2

EP 0 032 065 A1

- 1 -

DESCRIPTION

"Flexible drive-transmission cables and methods of
providing such cables with plastics coverings".

---

This invention relates to flexible drive-transmission
cables of the kind adapted for the transmission of longitudinal
drives along tubular guides, comprising a flexible core carrying
helically-coiled wire the turns of which are spaced from one
another and are adapted to be engaged in the manner of rack
teeth by a driving pinion.

Flexible drive-transmission cables of this kind are
known. Examples of possible utilizations of such a cable are
mentioned in U.S.A. Patent Specification 3,163,054 in connection
with devices for raising and lowering automobile windows and
for opening and closing automobile sliding roofs.

With such utilizations it may be necessary, unless one
supplies adequate lubricating agents to the tubular guide
interior, to exert relatively large forces in order to overcome
rubbing friction between the cable and the guide tube; moreover,
the shaking of the automobile may give rise to an objectionable
noise of rattling of the cable in the tubular guide. With a
view to reducing such rubbing friction and noise, U.S.A. Patent
Specification 3, 845, 669 proposes to provide in addition to the

0032065

- 2 -

cable a separate sheath of low-friction plastics material interposed between the cable and the tubular guide. Such sheath is formed with an open gap extending along its length through which gap at the position of the pinion the pinion teeth project in order to engage the turns of the helically-coiled wire of the cable.

A flexible cable adapted for the transmission of longitudinal drives along tubular guides, comprising a flexible core carrying helically-coiled wire the turns of which are spaced from one another and are adapted to be engaged in the manner of rack teeth by a driving pinion, is characterized according to the present invention in that the cable carries plastics material in the form of a continuous covering extending over both the helically-coiled wire and the core of the cable and which is relatively thick and relatively thin where it extends respectively over the crowns of the turns of the helically-coiled wire and over the core surfaces between the said turns.

The invention therefore provides a unitary plastics-protected cable of inherently low rubbing friction when used in an appropriate tubular guide and which does not present metal-to-metal contact with the tubular guide that might promote
rattling. On the wire turn crowns which contact or can contact
the tubular guide wall the plastics covering is relatively
thick and therefore it is adapted for the witstanding of wear.
However, since between the wire turns the plastics material
covering the cable is relatively thin the driving pinion can
have driving teeth long enough to exert effective driving
engagement with the plastics-covered wire turns in spite of
the presence of the plastics covering over the crowns of the
turns. Moreoçer, also by reason of the relative thinness of
the covering on the cable core itself, the flexibility of the
cable is relatively little impaired by the covering.

A method of providing with its continuous covering a
flexible cable as specified in the last foregoing paragraph but
one by advancing the cable through a machine adapted for the
extruding through an annular extruding orifice of a continuous
sleeve surrounding the cable leaving the machine of covering
material in heated, plastic condition is characterized
according to the present invention by maintaining such a
relation between cable speed and covering material extrusion
speed that the cable being covered draws out the
sleeve of heated, plastic material leaving the annular

- 4 -

orifice of the machine and continuously maintaining between the exterior and the interior of the drawn-out length of the sleeve of heated, plastic material a pneumatic pressure difference urging the heated, plastic material towards the cable and sufficient to stretch the said material, where it extends between the wire turns, into a covering to the core surfaces between the wire turns which is thinner than is the covering material on the crowns of the wire turns.

The invention will now be described by way of example with reference to the accompanying drawings, in which

Figure 1 is a side view of a length of flexible drive-transmission cable engaged rack-wise by a drive pinion, the left portion of the cable is shown without a plastics covering and the right portion of the cable is shown carrying such a covering;

Figure 2 is representation on a larger scale and in section on the line II-II of Figure 1 of part of the covered portion of the cable shown in Figure 1, and

Figure 3 is a sectional side elevation of a cross-head extrusion die apparatus in use for providing with its plastics covering a flexible drive-transmission cable as shown in Figures 1 and 2.

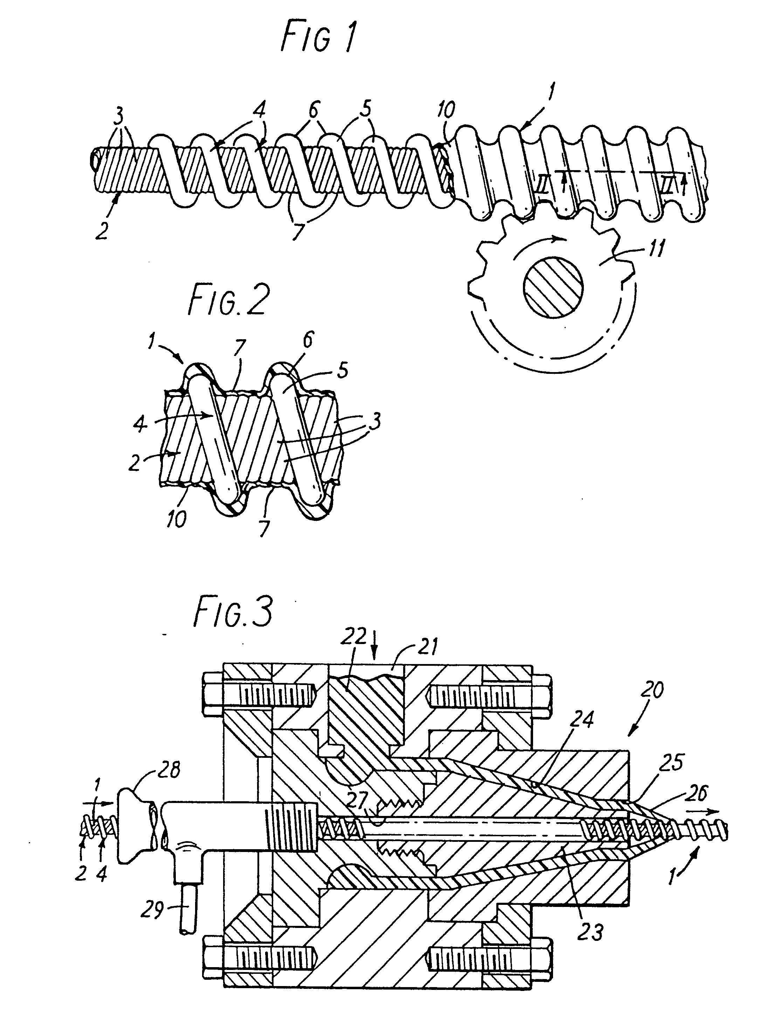

With reference to Figures 1 and 2 of the drawings, a flexible plastics-covered drive-transmission cable 1 adapted to be engaged in the manner of a rack by a drive pinion 11 comprises a flexible core 2 which is made up of a plurality of wire strands 3 wound helically anti-clockwise and which carries, wound helically clockwise around the core, a coil of wire 4 of considerably greater diameter than the diameters of the wire strands 3, the turns 5 of the wire 4 are spaced from one another and are adapted to be engaged by the drive pinion 11 in the manner of rack teeth.

The cable 1 carries plastics material in the form of a continuous covering 10 extending both over the wire 4 and over the core 2. The covering is substantially thicker over the crowns 6 of the wire turns 5 than it is over the core surfaces 7 between the wire turns 5; preferably it is at least twice as thick over the crowns 6 as it is over the core surfaces 7.

- 6 -

The cable is adapted to be disposed within an appropriately dimensioned tubular guide (not shown) for the transmission of longitudinal movements, effected by rotating the drive pinion, to a location which may be more or less remote from the location of the drive pinion. The cable is flexible whereby the movements may be transmitted along the tubular guide in spite of any necessity there may be that the said guide shall lie in somewhat curved configurations in its path between the drive pinion and the point of use of the longitudinal movements. One example of an envisaged point of use of a longitudinal movement of the drive-transmission cable would be a bracket attached in the most suitable place to an automobile window for effecting the raising and lowering thereof, which raising and lowering could be effected by a crank on the shaft of the drive pinion, which crank would preferably be located in the most suitable position for manual operation by an occupant of the automobile.

The plastics material of ⟨the⟩ covering 10 is preferably one of the types of nylon or a material of similar character.

With reference to Figure 3, a machine for covering the cable includes a cross-head extrusion die apparatus 20 having an inlet 21 through which heated, plastic nylon 22 is supplied under pressure by conventional means (not shown) to flow through an annular passage 24 around a tapering pilot mandrel 23 to an annular extruding orifice 25. A bore 27 extends through the apparatus along the mandrel axis along which bore the cable 1 comprising core 2 and the wire 4 is moved by suitable means (not shown) to leave the apparatus centrally of the annular extruding orifice 25, which is radially spaced from the bore 27 and the cable 1 leaving the bore. The heated, plastic nylon leaves the orifice 25 as a sleeve surrounding the cable and the cable speed and the nylon extrusion speed are chosen such that the said sleeve is drawn out between the orifice 25 and the already nylon-covered part of the advancing cable 1 and may thus tend towards the shape of a hollow frusto-cone. Between the exterior and interior of the drawn-out length of plastic nylon sleeve a pneumatic pressure difference is imposed by virtue of applying through a pipe 29 from a suitable device (not shown) a partial vacuum to the bore 27. A rubber diaphragm device 28 through which the cable 1 is caused to pass before
it enters the bore 27 is provided to form a seal to militate
against the breaking of the said partial vacuum.

The partial vacuum has the effect of enabling external
atmospheric pressure to urge the heated plastic nylon towards
the cable and, wherever the sleeve of plastic nylon has a part
spanning the space between the crowns of two adjacent turns of
the wire 4, to stretch that part of the sleeve as it approaches
the core 2 so that the said sleeve part becomes of smaller
thickness. The result is the covering of the cable with a nylon
covering of the characteristic features described with
reference to Figures 1 and 2.

It will be understood that the covered cable may be
run through a water cooling trough (not shown) if desirable or
necessary.

A cross-head extrusion die apparatus as described
with reference to Figure 3 has been used to apply Type No. 6
nylon to a cable to form a covering having a thickness of 0.009
inch (0.23 mm) at the wire crowns 6 and a thickness of 0.003
inch (0.075 mm) in the spaces between the wire turns. The
diameter of the extruding orifice 25 was 0.560 inch (14.2 mm),

the outer diameter of the tip of the mandrel 23 was 0.450
inch (11.4 mm) and the diameter of the bore 27 was 0.320
inch (8.1 mm). The die apparatus was heated to a temperature
of $490^{O}F$ ($254^{O}C$) while a partial vacuum of 20 inch Hg (50.8 cm Hg)
was exerted through the pipe 29. The cable being covered was
removed from the machine at a speed of 50 feet per minute (1524 cm
per minute). The nylon pressure was applied by a screw conveyor
operating at 10 revolutions per minute.

It should be borne in mind that the actual relative and
absolute thicknesses of the plastic covering at the wire
crowns 6 and over the core surfaces between the wire turns
will depend on many operating and dimensional factors,
amongst which may be mentioned by way of example the sealing
effectiveness of the diaphragm 28, the revolutions per minute
of the screw conveyor, the plastic temperature and the length
of the passage 24.

- 10 -

## CLAIMS

1. A flexible cable adapted for the transmission of longitudinal drives along tubular guides, comprising a flexible core carrying helically-coiled wire the turns of which are spaced from one another and are adapted to be engaged in the manner of rack teeth by a driving pinion, characterized in that the cable carries plastics material in the form of a continuous covering extending over both the helically-coiled wire and the core of the cable and which is relatively thick and relatively thin where it extends respectively over the crowns of the turns of the helically-coiled wire and over the core surfaces between the said turns.

2. A cable as claimed in Claim 1, characterized in that the plastics material covering is at least twice as thick where it extends over the crowns of the wire turns as where it extends over the core surfaces between the wire turns.

3. A cable as claimed in Claim 1 or Claim 2, characterized in that the core comprises a plurality of wire strands.

4. A method of providing with its continuous covering a flexible cable as claimed in any of Claims 1 to 3, by advancing the cable through a machine adapted for the extruding through an annular extruding orifice of a continuous sleeve surrounding the cable leaving the machine of covering material in heated, plastic condition, characterized by maintaining such a relation between the cable speed and covering material extrusion speed that the cable being covered draws out the sleeve of heated, plastic material leaving the annular orifice of the machine and continuously maintaining between the exterior and the interior of the draw-out length of the sleeve of heated, plastic material a pneumatic pressure difference urging the heated, plastic material towards the cable and sufficient to stretch the said material, where it extends between the wire turns, into a covering to the core surfaces between the wire turns which is thinner than is the covering material on the crowns of the wire turns.

5. A method as claimed in Claim 4, characterized by imposing the said pneumatic pressure difference by applying a partial vacuum to the interior of the said drawn-out length of sleeve of heated, plastic material.

0032065

FIG 1

FIG.2

FIG.3

0032065

## European Patent Office

# EUROPEAN SEARCH REPORT

Application number

EP 80 30 4775.2

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | CH - A - 315 014 (OSNABRÜCKER KUPFER- UND DRAHTWERK). <br> * claim I; fig. * <br> -- | 1 | F 16 C 1/20 <br> B 29 F 3/10 <br> F 16 H 19/00 |
| | DE - U - 7 136 899 (GEMO SPEZIALFABRIK BIEGSAMER WELLEN BRUNO MORITZ) <br> * claim 1; fig. 2 * <br> -- | 1,3 | |
| | GB - A - 938 681 (WARD & GOLDSTONE LTD.) <br> * claim 1; fig. 1 * <br> -- | 4 | **TECHNICAL FIELDS SEARCHED** (Int. Cl.³) |
| | GB - A - 1 429 691 (THE FURUKAWA ELEC- TRIC CO. LTD.) <br> * claim 1; fig. 1, 3 * <br> -- | 4 | B 29 F 3/00 <br> F 16 C 1/00 <br> F 16 H 19/00 <br> F 16 H 55/00 |
| A | DE - A - 2 209 263 (GEMO SPEZIALFABRIK BIEGSAMER WELLEN BRUNO MORITZ) <br> -- | | |
| A,D | US - A - 3 163 054 (J. WERNER) <br> -- | | |
| A,D | US - A - 3 845 669 (J. PICKLES) <br> ---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

| Place of search | Date of completion of the search | Examiner |
|---|---|---|
| Berlin | 13-03-1981 | MASSALSKI |

EPO Form 1503.1 06.78